# EUROPEAN PATENT SPECIFICATION

(11) **EP 1 280 351 B1**
(45) Date of publication and mention of the grant of the patent: **15.12.2010**
(21) Application number: 01309070.9
(22) Date of filing: 25.10.2001
(51) Int. Cl.: H04N 7/16, H04N 7/173, H04N 7/15

(54) **Communication between television audiences**
Kommunikation zwischen Fernsehzuschauern
Communication entre téléspectateurs

(30) Priority: 17.07.2001 JP 2001216272
(43) Date of publication of application: 29.01.2003
(73) Proprietor: FUJITSU LIMITED, Kawasaki-shi, Kanagawa 211-8588 (JP)
(72) Inventor: Hasegawa, Eiji, c/o Fujitsu Limited, Kawasaki-shi, Kanagawa 211-8588 (JP); Kamiwada, Toru, c/o Fujitsu Limited, Kawasaki-shi, Kanagawa 211-8588 (JP); Azami, Toshihiro, c/o Fujitsu Limited, Kawasaki-shi, Kanagawa 211-8588 (JP)
(74) Representative: Hitching, Peter Matthew

(56) References cited:
- WO-A-01/15449
- WO-A-01/46843
- WO-A-01/47238
- WO-A-99/20026
- WO-A-99/44149
- WO-A1-00/64150
- US-A- 5 828 839

## Description

### BACKGROUND OF THE INVENTION

### 1. Field of the Invention

The present invention relates to a method of providing means for communication between audiences in a television containing data broadcast and a TV communication terminal that can be used for the communication.

### 2. Description of the Prior Art

Conventionally, there are some communication tools such as a chat or a bulletin board using a personal computer for interchanging information between audiences about a television program. Such information interchange between audiences is performed using a communication network including the Internet and telephone lines. It is expected that such bi-directional communication means in real time can provide an abundant opportunity of communication concerning television broadcast.

In addition, it is desired to use an easy input tool such as a remote controller with a television set (and an accessory such as a set-top box) so that an audience who is not familiar with using a computer can perform the communication easily.

However, there is a problem as explained below when performing the above-mentioned communication between audiences about a television program in real time.

Namely, it is extremely difficult to control many communications between audiences about a specific program at one site. For example, if all the audiences watching the program everywhere in the country gather at one communication site, the communications will become substantially impossible. It is easy to predict that massive confusion will be caused if many audiences having different personalities and tastes about one subject gather at one communication site without being controlled.

WO 00/64150 discloses concurrent viewing of television programs and of text communications (a "chat room") concerning the television program. The chat rooms may be time-zone specific.

### SUMMARY OF THE INVENTION

An object of the present invention is to provide a method of providing means for communication between audiences, a TV communication terminal used for the method and a computer program, which enable smooth communication between audiences about a television program.

The invention is defined in the independent claims, to which reference should now be made. Advantageous embodiments are set out in the sub claims.

### BRIEF DESCRIPTION OF THE DRAWINGS

Fig. 1 shows a concept of a TV communication service according to an embodiment of the present invention.
Fig. 2 shows an example of an initial screen display in receiving data broadcast according to an embodiment of the present invention.
Fig. 3A shows description of a chat button described in the data broadcast markup language.
Fig. 3B shows an example of a channel list.
Fig. 4 is a flowchart showing an example of the process concerning the selection of an optimal channel by comparing attribution (an attribute) of an audience with attribution (an attribute) of the communication channel.
Fig. 5 shows an example of method for filtering comments of an audience who has a specific attribution.
Fig. 6 shows an example of the communication screen.
Fig. 7A shows an example of changing areas of screens in accordance with a keyword included in a comment of an audience.
Fig. 7B shows an example of changing a TV picture in accordance with a keyword included in a comment of an audience.
Fig. 8 shows an example where the audience performs an input operation easily using information displayed in a comment input support portion.
Fig. 9 shows an example of using a time code received by a TV communication terminal for reproducing the corresponding scene.

### DESCRIPTION OF THE PREFERRED EMBODIMENTS

Hereinafter, the present invention will be explained more in detail with reference to embodiments and drawings.

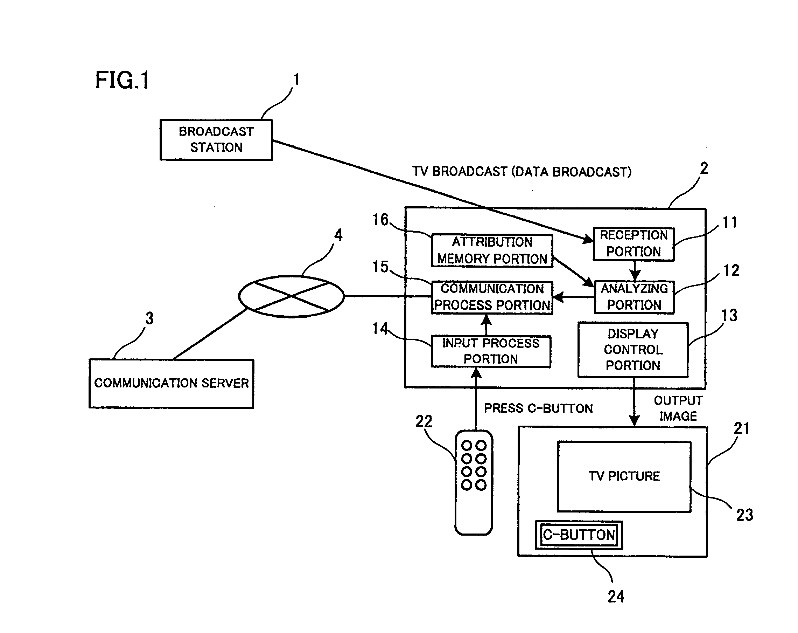

Fig. 1 shows a concept of a TV communication service according to an embodiment of the present invention. The system for realizing this service includes a broadcast station 1, a TV communication terminal 2 and a communication server 3. The TV communication terminal 2 and the communication server 3 can communicate with each other bi-directionally via the communication network 4.

The broadcast station 1 performs TV broadcast to the TV communication terminal 2. The TV communication terminal 2 has a connection function with the communication network 4 for performing bi-directional communication with the communication server 3. Moreover, the TV communication terminal 2 includes a monitor (a display device) 21 for displaying received TV pictures and other various displays for the communication function and a remote controller 22 as an input device.

The TV communication terminal 2 includes a reception portion 11 for receiving television containing data broadcast from the broadcast station 1, an analyzing portion 12 for analyzing information described in contents of the received data broadcast, a display control portion 13 for controlling display contents of the monitor 21 in accordance with the analysis. The TV communication terminal 2 also includes an input process portion 14 for processing an input signal from the remote controller 22 and a communication process portion 15 for performing communication with the communication server 3 via the communication network 4 in accordance with the analysis of the analyzing portion 12 and an instruction from the input process portion 14.

In the TV communication service according to the embodiment of the present invention, the broadcast station 1 can describe a format of the screen display on the monitor 21 in the data broadcast that is a sort of the television. The broadcast station 1 can also describe various processes that will be executed when a certain event occurs. For example, the data broadcast can contain a description of a display or a process for enabling a connection from the TV communication terminal 2 to the communication server 3 responding to an input from the remote controller 22.

After receiving the data broadcast, the TV communication terminal 2 analyzes the data broadcast and outputs images in accordance with display information contained in the data broadcast so as to display the images on the screen of the monitor 21. As shown in Fig. 1, the screen of the monitor 21 contains the TV picture 23 as well as a communication button (C-button) 24. When audience press the C-button 24 using the remote controller 22, the TV communication terminal 2 makes a connection with the communication server 3 that is described in the contents of the data broadcast, thereby communication between audiences can be performed.

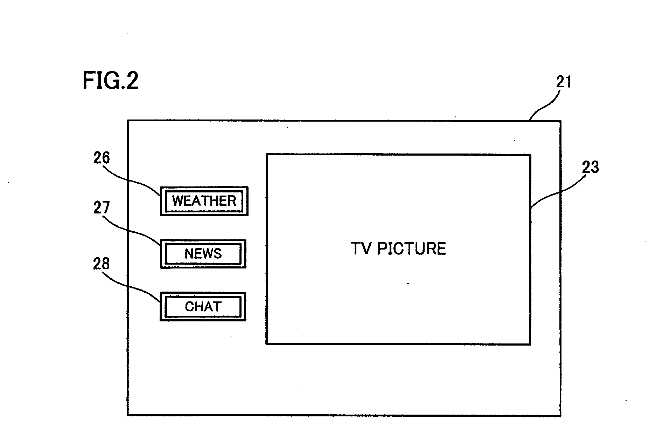

Fig. 2 shows an example of an initial screen display in receiving the data broadcast. On the screen of the monitor 21, a weather button 26, a news button 27 and a chat button 28 are displayed together with the TV picture 23. By pressing the weather button 26 using the remote controller 22 while receiving the TV broadcast, the audience can change the present screen to a screen of weather forecast (weather information) described in a data broadcast markup language (BML). In the same way, by pressing the news button 27, the audience can change the present screen to a news screen. In addition, when the audience presses the chat button 28, the TV communication terminal 2 makes the connection with the communication server 3 and displays the communication screen. Using this screen, the audience can make communication with other audiences.

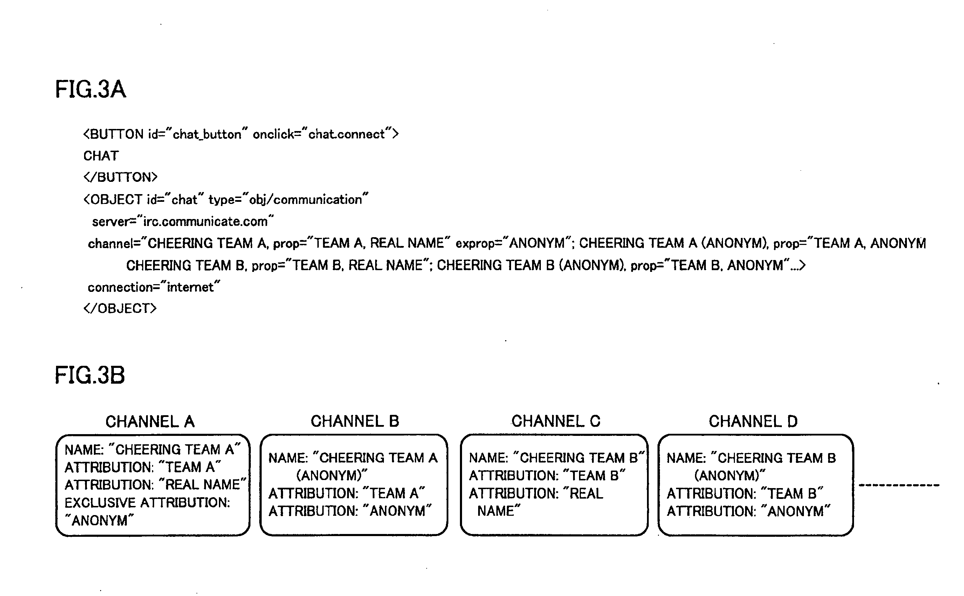

Fig. 3A shows description of a chat button described in the data broadcast markup language. Fig. 3B shows an example of a channel list. When the chat button 28 is pressed, as described by <BUTTON> in Fig. 3A, the process "connect()" of the object "chat" is called. The object "chat" is a communication project described in <OBJECT>, which describes information necessary for making a connection with the communication server, such as a communication server, a communication channel and means for making a connection to the communication server.

The communication server 3 provides a site for various communications about the program of the TV broadcast. The communication server 3 is provided with a plurality of the communication channels for treating a lot of subjects. Each of the channels is independent of other channels, so that communication sites about different subjects are provided. When the audience presses the chat button 28, the process connect(), i.e., the process for making a connection with the communication server 3 is executed by the communication process portion 15.

The analyzing portion 12 provides the communication process portion 15 with information about a communication server 3 to be connected with, method of the connection and a communication channel that were obtained from information described in the contents of the received data broadcast. The communication process portion 15 executes the connection with the communication server 3 in accordance with the information obtained from the analyzing portion 12. By this structure, the audience can make a connection with the communication server 3 and enjoy the chat with other audiences only by pressing the chat button 28 using the remote controller 22, without complicated setting. If the connection with the communication server 3 fails for the reason why a communication line is busy or other, the failure and the reason thereof are displayed on the screen of the monitor 21 so that the audience is informed thereof.

The information described in the contents of the data broadcast may include a plurality of communication channels that are used for making a connection with the communication server 3. A list of the plural channels as illustrated in Fig. 3B for example, is generated by analyzing the information described in the contents of the data broadcast.

Though a list containing all the generated channels can be provided to the audience, it may be burdensome to the audience electing a communication channel to be used if too many channels are provided. Therefore, it is better that the audience can reduce the number of the communication channels to be used in accordance with an attribution registered by the audience. For this purpose, the TV communication terminal 2 includes an attribution memory portion 16 for memorizing the attribution of the audience.

The analyzing portion 12 compares the attribution of the audience that was read out of the attribution memory portion 16 with the attribution of each communication channel obtained from the information described in the contents of data broadcast, so as to reduce the number of communication channels to be displayed on the screen of the monitor 21. It is possible to change the display order so that the communication channels are displayed in the order of descending matching ratio of their attribution with the attribution of the audience.

For example, it is supposed that the audience is watching a sport program such as a professional baseball game. It is also supposed that a first audience has an attribution of requesting anonymity and does not have an attribution of "being a fan of Team A" or "being a fan of Team B". In this case, it is offered to the first audience that there are two channels having the attribution matching the first audience; one is a channel of "cheering Team A (anonym) " (Channel B shown in Fig. 3B) and the other is a channel of "cheering Team B (anonym) " (Channel D shown in Fig. 3B). Then, the audience is required to select either of the channels.

Furthermore, it is supposed that a second audience has two attributions; one is an attribution of "allowing the name to be on public" and the other is an attribution of "being a fan of Team A". In this case, the channel of "cheering Team A" (Channel A shown in Fig. 3B) is displayed at the first line of the channel list so as to be selected easily by the audience since the channel has two matching attributions and is considered to be an optimal channel. Then, the channel of "cheering Team A (anonym) " (Channel B shown in Fig. 3B) and the channel of "cheering Team B" (Channel C shown in Fig. 3B), whose attributions match partially, are also displayed in the channel list.

A setting may be possible for making a connection with the optimal channel automatically. In this case, the channel of "cheering Team A" (Channel A shown in Fig. 3B), whose two attributions match, is considered to be the optimal channel and is connected automatically. The attribution of the audience is registered by the audience. Alternatively, the TV communication terminal 2 learns tastes of the audience and registers the attribution in accordance with the learning result. For example, the TV communication terminal 2 may register an attribution of a channel that is selected by the audience frequently as an attribution of the audience.

It is also possible to exclude (i.e., not to allow the connection of) an audience who has a specific attribution from a specific channel. For example, in the channel of "cheering Team A", the attribution of "being a fan of Team B" is set as an exclusive attribution. In this case, the channel of "cheering Team A" is excluded from the channel list that is displayed on the display of the TV communication terminal 2 (the monitor 21) of the audience who has the attribution of "being a fan of Team B".

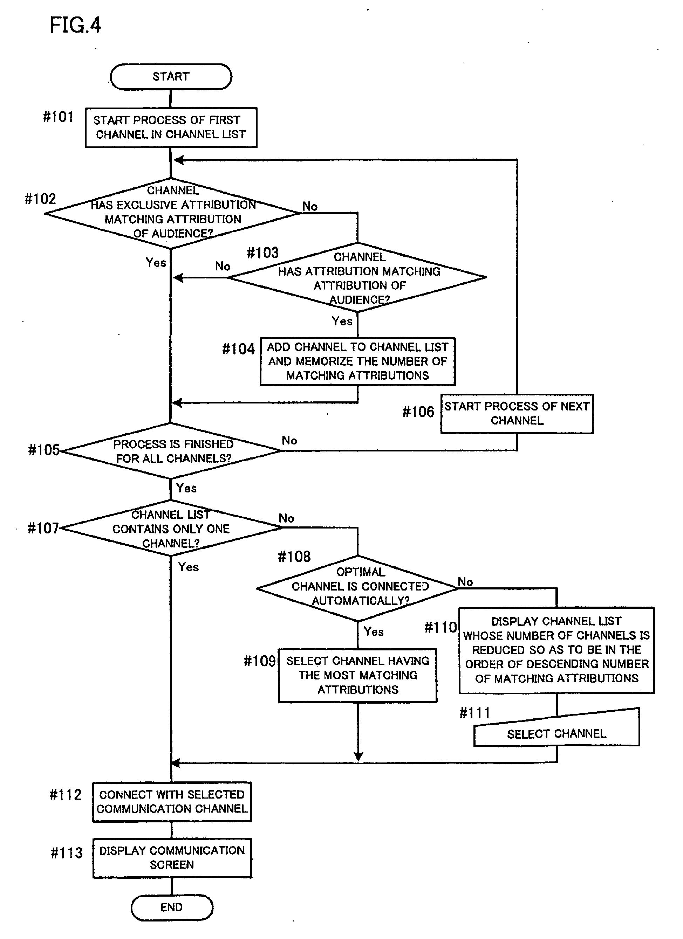

Fig. 4 is a flowchart showing an example of the process concerning the selection of an optimal channel by comparing the attribution of the audience with the attribution of the communication channel. In Step # 101, the process of the first channel in the channel list is started. In Step #102, it is checked whether the channel has an exclusive attribution that matches the attribution of the audience. If the channel has an exclusive attribution that matches the attribution of the audience, the process goes to Step # 105, while if the channel does not have the exclusive attribution, it is checked whether there is an attribution that matches the attribution of the audience in Step # 103. If there is an attribution matching the attribution of the audience, the channel is added to the channel list to be displayed, and the number of matching attributions is memorized (Step # 104).

In the next Step # 105, it is checked whether the process is finished for all channels. If the process is not finished for all channels, the next channel is processed (Step # 106). The process from Step # 102 through Step # 106 is repeated until the process is finished for all channels.

After finishing the process for all channels, it is checked in Step # 107 whether the channel list contains only one channel. If the channel list contains only one channel, the process goes to Step # 112. Otherwise, if the channel list contains plural channels, it is checked in Step # 108 whether an optimal channel is connected (is set to be connected) automatically. If it is connected automatically, the channel having the most matching attributions is selected in Step # 109, and the process goes to Step # 112. If the automatic connection is not set, the channel list, whose number of channels is reduced so that the channels are listed in the order of descending number of matching attributions, is displayed in Step # 110. Then the audience is required to select a channel. When the audience selects a channel in Step # 111, the process goes to Step # 112.

In Step # 112, the TV communication terminal 2 makes a connection with the selected communication channel, and displays a communication screen in Step # 113. Thus, the audiences can communicate with other audiences.

In the communication (chat) between audiences, it is possible to filter comments of an audience who has a specific attribution. For example, when a first audience wants to neglect comments of a fan of Team B, it is possible to set such that comments of an audience who has the attribution of "being a fan of Team B" are not displayed.

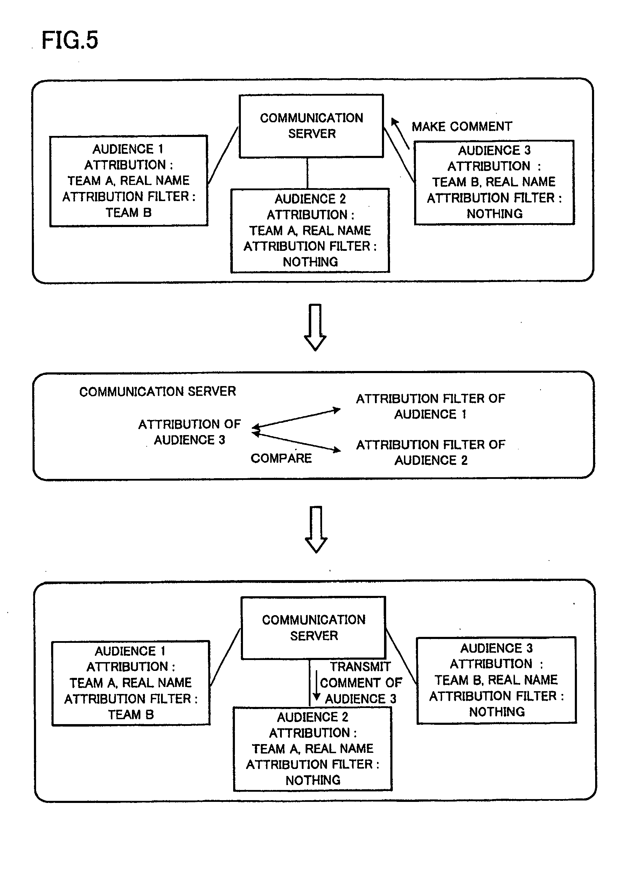

Fig. 5 shows an example of method for filtering comments of an audience who has a specific attribution. First, it is supposed that the first audience makes setting of neglecting comments of an audience who has the attribution of "being a fan of Team B". The set information is transmitted to the communication server 3, and it is set as an attribution filter of the first audience that comments of an audience who has the attribution of "being a fan of Team B" are not received. In addition, it is supposed that the attribution filter is not set for the second audience. Moreover, it is supposed that a third audience who has the attribution of "being a fan of Team B" makes a comment.

When transmitting comments of an audience to other audiences who joined the communication channel, the communication server 3 compares the attribution of the originator with the attribution filter of the audience who is a receiver. If both the attribution and the attribution filter match each other, the transmission is not performed. In this way, comments of the third audience are transmitted to the second audience but are not transmitted to the first audience. In this example, the communication server 3 performs the filtering. Alternatively, the TV communication terminal 2 may acquire the attribution of the audience who joins the communication channel and performs the above-mentioned filtering, so that comments of an audience having a specific attribution is not displayed.

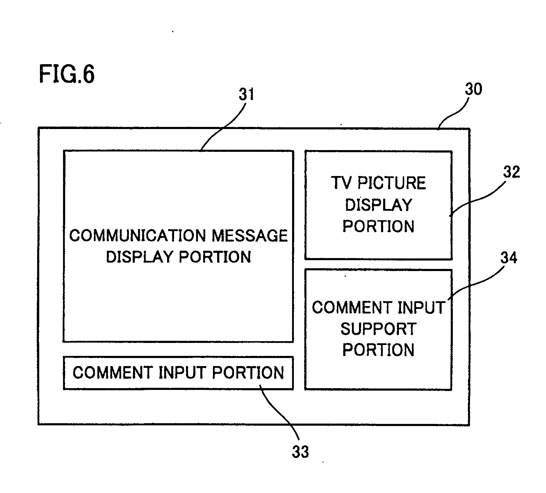

Fig. 6 shows an example of the communication screen. In the example of the screen display shown in Fig. 2, the chat button 28 is pressed so as to communicate with the communication server 3 as shown in the flowchart of Fig. 4. Then, the communication screen 30 appears on the monitor 21 as shown in Fig. 6. On this occasion, the communication channel can be selected.

The communication screen 30 includes a communication message display portion 31, a TV picture display portion 32, a comment input portion 33 and a comment input support portion 34. The comment input support portion 34 will be explained later and is not indispensable. By using a keyword included in a comment of an audience in the communication channel, areas of (an area ratio between) the communication message display portion 31 and the TV picture display portion 32 can be changed, or a picture displayed in the TV picture display portion 32 can be changed. The keyword can be set by the audience or set in the broadcast station 1 side.

An example of the method for changing the area or the contents of the display by using the keyword is as follows. In the communication screen 30, an event that a keyword appears for the communication channel activates the process, a script process that can be described in the contents of the data broadcast changes the data screen or perform the process of tuning.

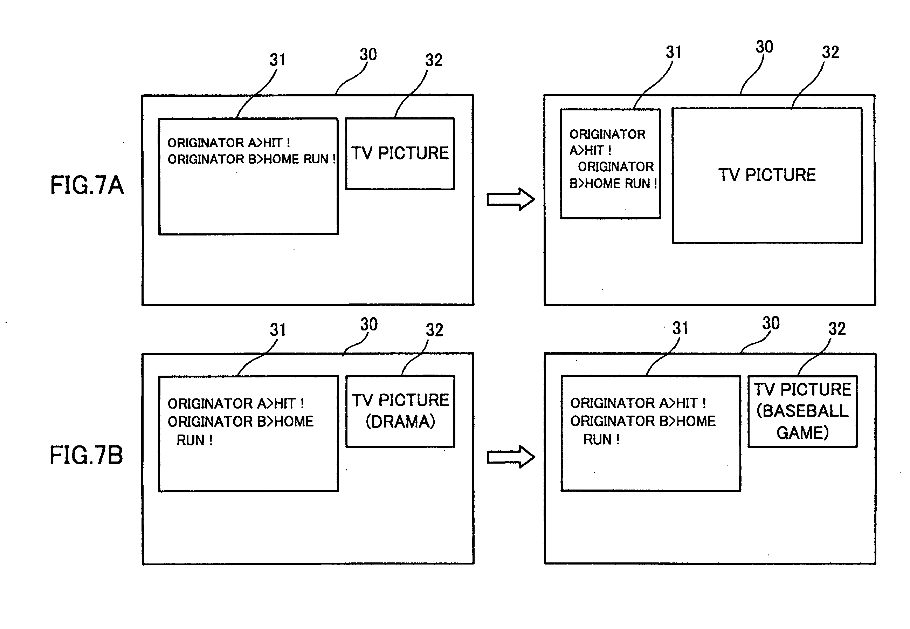

Fig. 7A shows an example of changing areas of screens in accordance with a keyword included in a comment of an audience. Fig. 7B shows an example of changing a TV picture in accordance with a keyword included in a comment of an audience. In these examples, in accordance with a keyword "home run" included in the comment of the audience (the originator B), areas of (an area ratio between) the screens are changed as shown in Fig. 7A, or a TV picture (a TV program) is changed as shown in Fig. 7B. Namely, when a keyword "home run" is detected in the communication channel, the area of the communication message display portion 31 is decreased while the area of the TV picture display portion 32 is increased as shown in Fig. 7A. The picture displayed in the TV picture display portion 32 is changed from a drama to a baseball game as shown in Fig. 7B.

Next, the comment input support portion 34 shown in Fig. 6 will be explained. The information that is displayed in the comment input support portion 34 is transmitted via the data broadcast or the communication network to the TV communication terminal 2, which utilizes the information for the audience to do input operations easily.

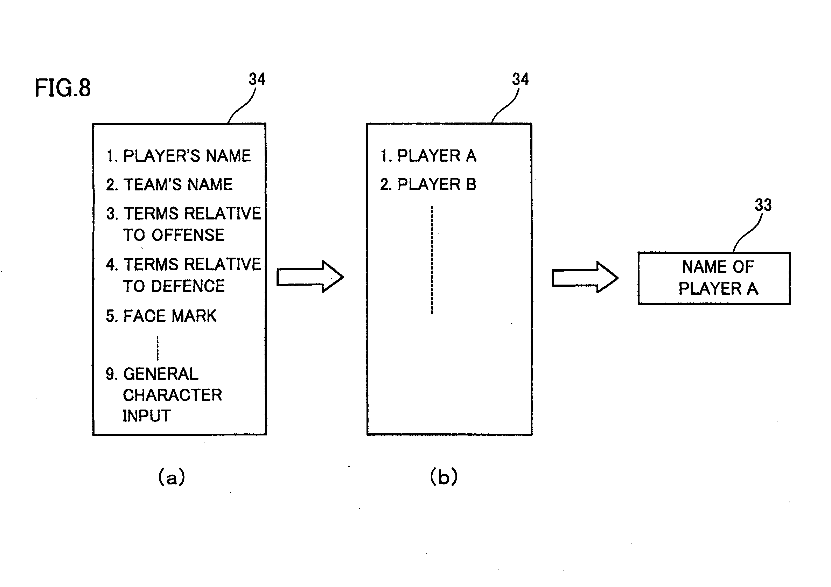

Fig. 8 shows an example where the audience performs an input operation easily using the information displayed in the comment input support portion 34. In this example of a sport program, the information as shown in (a) is displayed in the comment input support portion 34. The audience selects "1. Player's name" in the comment input support portion 34, for example. This selection can be performed by pressing "1" button or "cursor move" button and "selection" button using the remote controller 22, for example.

Then, a list of player's names as shown in (b) is displayed in the comment input support portion 34. When pressing the "1" button or pressing the "selection" button after moving the cursor by the "cursor move" button so as to select the player A, a name of the player A is inputted in the comment input portion 33. In this example, the input of the player's name requires only two strokes of selection, which are less than the trouble of the case where a general hiragana-to-kanji conversion method is used. If the general hiragana-to-kanji conversion method is used for inputting characters, the input strokes can be reduced by using a conversion dictionary that is adapted to the program. The conversion dictionary adapted to the program can be transmitted via the digital broadcast or the communication network to the TV communication terminal 2. By arranging the dictionary so that words having closer relationship with contents of the program or the communication channel are displayed with higher priorities, the efficiency of inputting characters using the hiragana-to-kanji conversion method will be improved.

Next, a cooperative service of the communication and picture accumulation function will be explained. The TV communication terminal 2 that can utilize this service must include an accumulation function of TV programs (record function) and a picture reproduction function by designating time. These functions can be realized by external equipment that is connected to the TV communication terminal 2. A time code as a communication message is transmitted to the TV communication terminal 2 having the TV program accumulation function and the reproduction function. The audience selects the time code received by the TV communication terminal 2, so that the picture of the corresponding scene can be reproduced from programs accumulated in the TV program accumulation function. The time code can be replaced with other information that can specify a scene such as an inning number of a baseball game, for example. If such information is embedded in the contents of the accumulated programs, the scene can be reproduced automatically in the same way as in the case utilizing the time code.

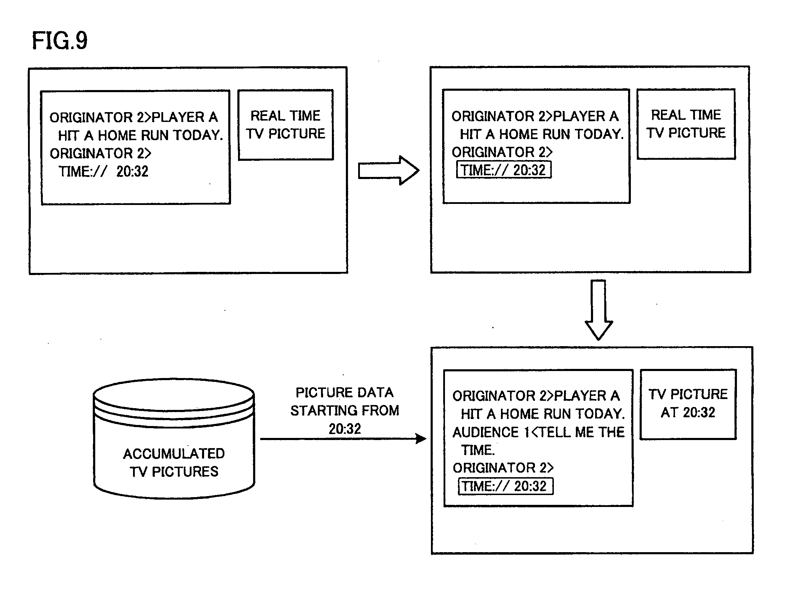

Fig. 9 shows an example of using a time code received by the TV communication terminal 2 for reproducing the corresponding scene. First, information of time when the player A hit a home run is transmitted as a time code from an originator 2. An audience who received this time code can select the time code for performing a process. For example, if the audience wants to watch the scene, he or she selects the time code for decision or other similar operation. Then, picture data of the designated time are retrieved from the accumulated TV pictures and automatic reproduction of the corresponding picture is started. In this way, by transmitting and receiving a time code as a message, other audience can reproduce the picture of the scene at that time easily. In addition, it is possible to provide a service of transmitting a digest of contents containing the time codes.

While the presently preferred embodiments of the present invention have been shown and described, it will be understood that the present invention is not limited thereto, and that various changes and modifications may be made by those skilled in the art without departing from the scope of the invention as set forth in the appended claims.

## Claims

1. A method of providing means for communication between audiences using a communication server (3) whose address is received by a TV communication terminal (2) via a television or a communication network (4), wherein the TV communication terminal can receive television broadcast and can be connected to the communication network, the method including:
displaying a television picture display portion and a message display portion for communication between audiences simultaneously on a monitor; and **characterised by**
detecting a keyword included in a comment of communication between audiences; and
changing an area ratio of the television picture display portion to the message display portion or changing a picture displayed in the television picture display portion in accordance with the keyword.

2. A method according to claim 1, the method further comprising the steps of:
preparing a plurality of communication channels for one television program, the communication channels being sites to which audiences can be connected for mutual communication; and
comparing an attribute of an audience who uses the TV communication terminal (2) with an attribute of each of the communication channels, so that the audience watching the television program can use an optimum communication channel for making communication with other audiences.

3. The method according to claim 2, wherein each of the communication channels has an exclusive attribute and the method further comprises the step of eliminating a connection of an audience to a communication channel if the attribute of the audience matches an exclusive attribute of the communication channel.

4. The method according to claim 2 or 3, further comprising the step of using an attribute filter set by an audience for filtering a comment of another audience having a specific attribute.

5. A method according to any of the preceding claims, the method further comprising the step of the TV communication terminal receiving a monitor screen display and a script for an audience via data broadcast or the communication network for aiding the audience to input a comment easily.

6. The method according to claim 5, wherein the monitor screen display and the script include data of a conversion dictionary adapted to contents of a television program or a communication channel.

7. A method according to any of the preceding claims, the method further comprising the steps of:
providing the TV communication terminal (2) with a picture accumulation function by recording pictures and an automatic reproducing function by designating time; and
receiving a time code at the TV communication terminal (2) from another TV communication terminal of another audience, so that the TV communication terminal that received the time code can restore the picture designated by the time code from the accumulated pictures and play the picture.

8. A method according to any of the preceding claims, the method further comprising the steps of:
providing the TV communication terminal (2) with a picture accumulation function by recording pictures and an automatic reproducing function by designating time; and
transmitting a digest picture including a time code to the TV communication terminal via a communication channel.

9. A TV communication terminal (2) providing means for communicating between the audience of the TV communication terminal and other audiences using a communication server whose address is received at the TV communication terminal via a television or communication network, the TV communication terminal comprising:
a reception portion for receiving television broadcast containing data broadcast;
a connecting portion (15) to the communication network;
a display control portion (13) operable to control a display of a television picture display portion; and
a message display portion for communication between audiences simultaneously on a monitor; **characterised by**
a detection portion operable to detect a keyword included in a comment of communication between audiences;
the display control portion being operable to change an area ratio of the television picture display portion to the message display portion or a picture displayed in the television picture display portion in accordance with the keyword.

10. A computer program which when executed by a computer built in a TV communication terminal, carries out the method of any of the preceding method claims.

## Patentansprüche

1. Verfahren zum Vorsehen eines Mittels zur Kommunikation zwischen Zuschauern unter Verwendung eines Kommunikationsservers (3), dessen Adresse durch ein TV-Kommunikationsterminal (2) über ein Fernseh- oder ein Kommunikationsnetz (4) empfangen wird, bei dem das TV-Kommunikationsterminal eine Fernsehrundsendung empfangen kann und mit dem Kommunikationsnetz verbunden sein kann, welches Verfahren enthält:
gleichzeitiges Anzeigen eines Fernsehbildanzeigeabschnittes und eines Mitteilungsanzeigeabschnittes zur Kommunikation zwischen Zuschauern an einem Monitor; **gekennzeichnet durch**
Detektierten eines Schlüsselwortes, das in einem Kommentar der Kommunikation zwischen Zuschauern enthalten ist; und
Verändern eines Bereichsverhältnisses des Fernsehbildanzeigeabschnittes zu dem Mitteilungsanzeigeabschnitt oder Verändern eines in dem Fernsehbildanzeigeabschnitt angezeigten Bildes gemäß dem Schlüsselwort.

2. Verfahren nach Anspruch 1, welches Verfahren ferner die Schritte umfasst:
Vorbereiten einer Vielzahl von Kommunikationskanäle für ein Fernsehprogramm, welche Kommunikationskanäle Orte sind, mit denen Zuschauer zur gegenseitigen Kommunikation verbunden werden können; und
Vergleichen eines Attributes eines Zuschauers, der das TV-Kommunikationsterminal (2) verwendet, mit einem Attribut eines jeden der Kommunikationskanäle, so dass der Zuschauer, der das Fernsehprogramm verfolgt, einen optimalen Kommunikationskanal zum Durchführen der Kommunikation mit anderen Zuschauern verwenden kann.

3. Verfahren nach Anspruch 2, bei dem jeder der Kommunikationskanäle ein exklusives Attribut hat und das Verfahren ferner den Schritt zum Eliminieren einer Verbindung eines Zuschauers mit einem Kommunikationskanal hat, falls das Attribut des Zuschauers mit einem exklusiven Attribut des Kommunikationskanals übereinstimmt.

4. Verfahren nach Anspruch 2 oder 3, ferner mit dem Schritt zum Verwenden eines Attributfilters, das durch einen Zuschauer zum Filtern eines Kommentars eines anderen Zuschauers, der ein spezifisches Attribut hat, eingestellt wird.

5. Verfahren nach einem der vorhergehenden Ansprüche, welches Verfahren ferner den Schritt umfasst: Empfangen, durch das TV-Kommunikationsterminal, einer Bildschirmanzeige und eines Skriptes für einen Zuschauer über eine Datenrundsendung oder das Kommunikationsnetz, um dem Zuschauer bei der leichten Eingabe eines Kommentars zu helfen.

6. Verfahren nach Anspruch 5, bei dem die Bildschirmanzeige und das Skript Daten eines Korwertierungswörterbuches enthalten, das an den Inhalt eines Fernsehprogramms oder eines Kommunikationskanals angepasst ist.

7. Verfahren nach einem der vorhergehenden Ansprüche, welches Verfahren ferner die Schritte umfasst:
Versehen des TV-Kommunikationsterminals (2) mit einer Bildakkumulierungsfunktion durch Aufzeichnen von Bildern und einer automatischen Wiedergabefunktion durch Bezeichnen der Zeit; und
Empfangen eines Zeitcodes am TV-Kommunikationsterminal (2) von einem anderen TV-Kommunikationsterminal eines anderen Zuschauers, so dass das TV-Kommunikationsterminal, das den Zeitcode empfangen hat, das durch den Zeitcode bezeichnete Bild von den akkumulierten Bildern wiederherstellen kann und das Bild abspielen kann.

8. Verfahren nach einem der vorhergehenden Ansprüche, welches Verfahren ferner die Schritte umfasst:
Versehen des TV-Kommunikationsterminals (2) mit einer Bildakkumulierungsfunktion durch Aufzeichnen von Bildern und einer automatischen Wiedergabefunktion durch Bezeichnen der Zeit; und
Senden eines Bildauszugs, der einen Zeitcode enthält, an das TV-Kommunikationsterminal über einen Kommunikationskanal.

9. TV-Kommunikationsterminal (2), das ein Mittel zur Kommunikation zwischen dem Zuschauer des TV-Kommunikationsterminal und anderen Zuschauern unter Verwendung eines Kommunikationsscrvers vorsieht, dessen Adresse an dem TV-Kommunikationsterminal über ein Fernseh- oder Kommunikationsnetz empfangen wird, welches TV-Kommunikationsterminal umfasst:
einen Empfangsabschnitt zum Empfangen einer Fernsehrundsendung, die eine Datenrundsendung enthält;
einen Verbindungsabschnitt (15) zum Kommunikationsnetz;
einen Anzeiqesteuerabschnitt (13), der betriebsfähig ist, um eine Anzeige eines Fernsehbildanzeigeabschnittes zu steuern; und
einen Mitteilungsanzeigeabschnitt zur gleichzeitigen Kommunikation zwischen Zuschauern an einem Monitor; **gekennzeichnet durch**
einen Detektzonsabschnitt, der betriebsfähig ist, um ein Schlüsselwort zu detektieren, das in einem Kommentar der Kommunikation zwischen Zuschauern enthalten ist;
welcher Anzeigesteuerabschnitt betriebsfähig ist, um ein Bereichsverhältnis des Fernsehbildanzeigeabschnittes zu dem Mitteilungsanzeigeabschnitt oder ein in dem Fernsehbildanzeigeabschnitt angezeigtes Bild gemäß dem Schlüsselwort zu verändern.

10. Computerprogramm, das bei Ausführung durch einen in ein TV-Kommunikationsterminal eingebauten Computer das Verfahren nach einem der vorhergehenden Verfahrensansprüche ausführt.

## Revendications

1. Procédé consistant à procurer un moyen pour communication entre des téléspectateurs en utilisant un serveur (3) de communication dont l'adresse est reçue par un terminal (2) de communication par TV via un réseau (4) de télévision ou de communication, dans lequel le terminal de communication par TV peut recevoir une émission de télévision et peut être connecté au réseau de communication, le procédé incluant :
l'affichage, simultanément sur un écran, d'une partie d'affichage d'image de télévision et d'une partie d'affichage de messages pour communication entre téléspectateurs ; et **caractérisé :**
**par** la détection d'un mot-clé inclus dans un commentaire de communication entre téléspectateurs ; et
par le changement du rapport de surface de la partie d'affichage d'image de télévision à la partie d'affichage de messages ou par le changement d'une image affichée dans la partie d'affichage d'image de télévision en fonction du mot-clé.

2. Procédé selon la revendication 1, le procédé comprenant en outre les étapes :
de préparation d'une pluralité de voies de communication pour un même programme de télévision, les voies de communication étant des sites auxquels les téléspectateurs peuvent être connectés pour communication mutuelle ; et
de comparaison d'un attribut d'un téléspectateur qui utilise le terminal (2) de communication par TV avec un attribut de chacune des voies de communication, de sorte que le téléspectateur regardant le programme de télévision peut utiliser une voie optimale de communication pour réaliser la communication avec d'autres téléspectateurs.

3. Procédé selon la revendication 2, dans lequel chacune des voies de communication possède un attribut d'exclusion et dans lequel le procédé comprend en outre l'étape d'élimination d'une connexion d'un téléspectateur à une voie de communication si l'attribut du téléspectateur concorde avec un attribut d'exclusion de la voie de communication.

4. Procédé selon la revendication 2 ou 3, comprenant en outre l'étape d'utilisation d'un filtre d'attribut paramétré par un téléspectateur pour filtrer un commentaire d'un autre téléspectateur ayant un attribut spécifique.

5. Procédé selon l'une quelconque des revendications précédentes, le procédé comprenant en outre l'étape de réception par terminal de communication par TV d'un affichage d'une fenêtre d'écran et d'un texte pour un téléspectateur par diffusion de données ou par le réseau de communication pour aider le téléspectateur à entrer facilement un commentaire.

6. Procédé selon la revendication 5, dans lequel l'affichage de fenêtre d'écran et le texte incluent des données d'un dictionnaire de conversion adapté au contenu d'un programme de télévision ou à une voie de communication.

7. Procédé selon l'une quelconque des revendications précédentes, le procédé comprenant en outre les étapes consistant :
à munir le terminal (2) de communication par TV d'une fonction d'accumulation d'images par enregistrement d'images et d'une fonction de reproduction automatique par désignation d'un temps ; et
à recevoir un code temporel au niveau du terminal (2) de communication par TV en provenance d'un autre terminal de communication par TV d'un autre téléspectateur, de sorte que le terminal de communication par TV qui reçoit le code temporel peut, à partir des images accumulées, restaurer l'image désignée par le code temporel et reproduire l'image.

8. Procédé selon l'une quelconque des revendications précédentes, le procédé comprenant en outre les étapes consistant :
à munir le terminal (2) de communication par TV d'une fonction d'accumulation d'images par enregistrement d'images et d'une fonction de reproduction automatique par désignation d'un temps ; et
à transmettre, au terminal de communication par TV via une voie de communication, une image sommaire incluant un code temporel.

9. Terminal (2) de communication par TV procurant un moyen pour communication entre le téléspectateur du terminal de communication par TV et d'autres téléspectateurs en utilisant un serveur de communication dont l'adresse est reçue au niveau du terminal de communication par TV via un réseau de télévision ou de communication, le terminal de communication par TV comprenant :
une section de réception destinée à recevoir une émission de télévision contenant une diffusion de données ;
une section (15) de connexion au réseau de communication ;
une section (13) de commande d'affichage utilisable pour commander l'affichage d'une partie d'affichage d'image de télévision ; et
une section d'affichage, simultanément sur un écran, de messages pour communication entre téléspectateurs ; **caractérisé :**
**par** une section de détection utilisable pour détecter un mot-clé inclus dans un commentaire de communication entre téléspectateurs ;
la section de commande d'affichage étant utilisable pour changer le rapport de surface de la partie d'affichage d'image de télévision à la partie d'affichage de messages ou une image affichée dans la partie d'affichage d'image de télévision en fonction du mot-clé.

10. Programme informatique qui, lorsqu'il est exécuté par un processeur incorporé dans un terminal de communication par TV, met en oeuvre le procédé selon l'une quelconque des revendications précédentes.
